# EUROPEAN PATENT SPECIFICATION

(11) **EP 3 468 818 B1**
(45) Date of publication and mention of the grant of the patent: **31.03.2021**
(21) Application number: 17733534.6
(22) Date of filing: 09.06.2017
(51) Int. Cl.: B60G 5/00, B60G 11/46, B60G 17/016

(54) **FRONT SUSPENSION SYSTEM**
VORDERRADAUFHÄNGUNGSSYSTEM
SYSTÈME DE SUSPENSION AVANT

(30) Priority: 10.06.2016 IT UA20164285
(43) Date of publication of application: 17.04.2019
(73) Proprietor: Iveco Defence Vehicles S.p.A., 39100 Bolzano (IT)
(72) Inventor: HONOLD, Max, D89160 Dornstadt (DE)
(74) Representative: Faraldi, Marco
(86) International application number: PCT/IB2017/053429
(87) International publication number: WO 2017/212455

(56) References cited:
- EP-A1- 0 352 541
- WO-A1-2006/093458
- DE-U1- 29 907 673
- FR-A1- 2 529 838

## Description

### Field of the invention

The present invention relates to a front suspension system, in particular of an industrial vehicle comprising two front axles.

### Description of the prior art

Heavy-duty industrial vehicles are provided with two front axles, both steering.

Usually the second is connected to the chassis through a dedicated suspension in order to bear higher load.

However, an uneven load distribution can arise with a poor drivability of the vehicle. Other negative effects are a poor braking action and an uneven tyre wear.

Document DE 299 07 673 U1 discloses a commercial vehicle at a reduced cost on the basis of existing vehicles. To achieve this object, the invention provides that in an existing commercial truck, a driven with a linkage control second front axle is installed, wherein preferably the existing first front axle of the truck is placed in the installation of the second front axle in a relation to the original position forward offset position.

### Summary of the invention

The main aim of the present invention to provide a suspension scheme implemented for both the front axle capable to improve the drivability of the vehicle and to reduce the above problems/drawbacks.

The main principle of the invention is to combine air bellows with guided spring leafs.

In addition, the air bellows are controlled in order to evenly distribute the load between both the two front axles.

A first object of the present invention is a front suspension system for a two front axle industrial vehicle. Another object of the present invention is a vehicle comprising such front suspension system.

Advantageously, the present invention, not only permits to better distribute the load and consequently the wear of the tyre on both the front axles, but, in case the vehicle is capable to control the height of the chassis, being the two front axles suspensions identical between each other, also the height control is easiest in view of the fact that the geometries of the suspension do not introduce uneven distribution of load with the height variation. Analogously, also the stiffness variation of the bellows reaction does not introduce uneven distribution of load. The attached claims describe preferred embodiments of the invention, forming an integral part of the present description.

### Brief description of the drawings

The invention will become fully clear from the following detailed description, given by way of a mere exemplifying and non limiting example, to be read with reference to the attached executive drawing figures, wherein:
- Fig. 1 shows a side view of the front suspension system,
- Fig. 2 shows a top view of the front suspension system of figure 1;
- Fig. 3 shows a perspective view of the front suspension system of figure 1.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

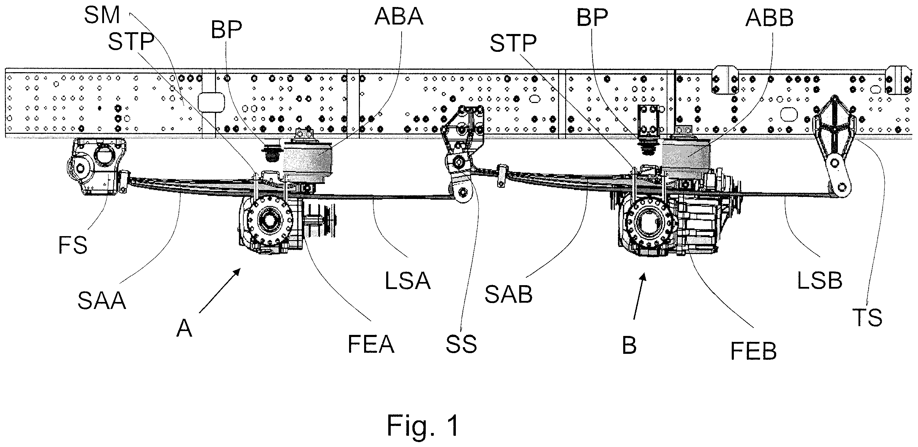

Figure 1 discloses a front suspension system according to the present invention.

The suspension system comprises two front axles A and B anchored to the side members SM defining the chassis of the industrial vehicle.

Both axles are steering, even if they could assume different steering angles: usually the second axle assume a relative reduced steering angle in comparison with the first one.

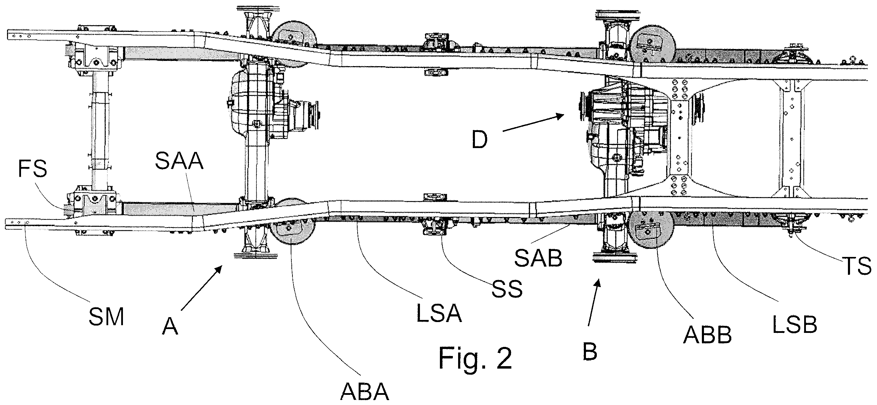

The ends of the side members SM depicted on the left side of figures 1 - 3 are shaped to support an internal combustion engine and a cab where a dashboard and controls are arranged. Thus, the axle A is the first front axle and the axle B is the second one arranged just behind the axle A.

The suspension system comprises, for each side of the vehicle, two leaf springs LSA and LSB arranged longitudinally, namely substantially parallel to the side member, one for each axle A and B.

The first leaf spring LSA is anchored, at its opposite ends, to the side member SM by means of a first support FS and a second support SS.

A first swinging arm SAA, having an elongated shape, has a first end hinged to the first support FS and a second end fixedly connected with an intermediate region of the first leaf spring LSA and with one end of the first axle A. Therefore, the first support defines a coaxial hinge for both the first leaf spring and its swinging arm. The bellow ABA is arranged between the leaf spring and its corresponding side member, in order to control the relative approaching/removal movement of the axle A with respect to the vehicle chassis.

Preferably, said fixed connection is realized by means of strips STP per se known in order to pack together axles and leaf springs.

The second support SS defines two parallel hinges: one to support a second end of the first leaf spring LSA and another to support a first end of the second leaf spring LSB and its corresponding second swinging arm SAB. The construction of the second suspension is substantially identical to the first one.

A third support TS connect the second end of the second leaf spring LSB by defining a further hinge.

All the hinges have axes perpendicular to the longitudinal development of the side members.

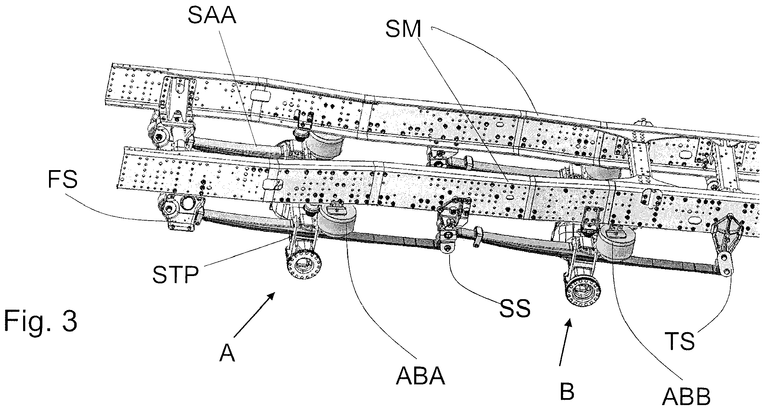

The second end of the first swinging arm SAA is also connected to the side member SM though a first bellow ABA interposed between said end and the side member. Analogously the second arm of the second swinging arm SAB is also connected to the side member SM though a second bellow ABB interposed between said end and the side member. According to figure 3, it is clear that the side member diverge between each other in order to offer a larger room to the combustion engine.

Therefore, the first support FS is connected to the side member internally, namely the face of the side member oriented toward the other side member.

The second SS support element is perfectly under the side member, while the third TS support element is connected to the external face of the side member.

According to a preferred embodiment of the invention, the bellows are air bellow or hydro-pneumatic bellow. Preferably, the bellows are directly connected to corresponding swinging arms SAA, SAB, namely without any carriers.

Anyway, it is preferred the implementation of an automated load distribution between the axles A and B as the load distribution means usually adopted in the rear axles of the industrial vehicles.

Preferably, the second axle B is of the driving type, and first axle A is of the driven type therefore, in the figures a differential arrangement is disclosed to distribute torque over the wheels.

According to another configuration, both the axles are of the driving type, thus both are provided of a central differential to receive propulsion by the internal combustion engine of the like through a transmission shaft. However, other configuration can be foresee, for example the first axle A could be provided of hydraulic engine in the hubs, while the second axle B could be driven by the internal combustion engine through a transmission shaft.

Preferably, in order to avoid any collisions between the axles and the side members, bumper BP are connected on the side members, protruding downwards, comprising resilient elements arranged in order to stop the second ends of the swinging arms SAA and SAB while approaching the chassis.

Many changes, modifications, variations and other uses and applications of the subject invention will become apparent to those skilled in the art after considering the specification and the accompanying drawings, which disclose preferred embodiments thereof. All such changes, modifications, variations and other uses and applications do not depart from the scope of the invention are deemed to be covered by this invention as disclosed in the claims.

## Claims

1. Front suspension system for industrial vehicles comprising two frontal axles (A, B) a first axle (A) and a second axle (B) arranged just behind the first axle (A), both connected to a vehicle chassis (SM), wherein the suspension system comprises for each side of the vehicle:
- two consecutive leaf springs (LSA, LSB), one for each of said axles (A, B), wherein each leaf spring has a first end and an opposite second end hinged to the vehicle chassis,
- a swinging arm (SAA, SAB) for each axle,
- a bellow (ABA, ABB) for each axle interposed between the leaf spring and the vehicle chassis,
said first end of the second leaf spring (LSB) of the second axle (B) being hinged to the chassis by means of a first support element (SS), and wherein said corresponding swinging arm (SAB) has a first end also hinged to the vehicle chassis by means of said first support element (SS), thereby said first and second leaf spring are consecutive due to said common first support element (SS);
**characterized in that** each said swinging arm (SAA, SAB) has a first end hinged to the vehicle chassis and a second end fixedly connected with an intermediate region of the leaf spring and with one end of the corresponding axle;
said system further comprising bumpers (BP) connectable to side members of said vehicle, protruding in use downwards, and comprising, in turn, resilient elements to stop said second ends of said swinging arms (SAA, SAB) while approaching said chassis;
each said bellow (ABA, ABB) being interposed between said second ends of said swinging arms (SAA, SAB) and a side member of said vehicle.

2. System according to claim 1, wherein said bellow is an air bellow or a hydro-pneumatic bellow.

3. System according to claim 1 or 2, wherein said first end of the first leaf spring (LSA) of the first axle (A) is hinged to the chassis by means of a second support element (FS) and wherein said corresponding swinging arm (SAA) has a first end also hinged to the vehicle chassis by means of said second support element (FS).

4. System according to claim 3, wherein said first and/or second support element define a first common hinge for said first end of said first leaf spring and said first end of said first swinging arm and/or a second common hinge for said first end of said second leaf spring and said first end of said second swinging arm.

5. System according to previous claim 4, wherein said first leaf spring has a second end hinged to the vehicle chassis by means of said second support element defining a third hinge parallel to said second hinge.

6. System according to previous claims 3 - 5 , wherein said second leaf spring has a second end hinged to the vehicle chassis by means of a third support element (TS) defining a fourth hinge.

7. System according to anyone of the previous claims 1 - 6, further comprising load distribution means operatively associated with said first and second bellows (ABA, ABB) configured to evenly distribute a load over said first and second axles.

8. System according to claim 7, further comprising means for varying stiffness and/or height of said first and second axles (A, B) by maintaining an evenly distribution of load over said first and second axles.

9. Industrial vehicle having a chassis, two front axles (A, B): a first axle (A) and a second axle (B) arranged just behind the first axle (A), both connected to said chassis (SM), wherein the suspension system is according to anyone of previous claims 1 - 8.

## Patentansprüche

1. Vorderradaufhängungssystem für Nutzfahrzeuge, umfassend zwei Vorderachsen (A, B), nämlich eine erste Achse (A) und eine zweite Achse (B), die unmittelbar hinter der ersten Achse (A) angeordnet ist, und welche beide mit einem Fahrzeugfahrgestell (SM) verbunden sind, welches Aufhängungssystem für jede Fahrzeugseite folgendes umfasst:
- zwei hintereinander angeordnete Blattfedern (LSA, LSB), nämlich eine für jede der Achsen (A, B), von denen jede Blattfeder ein erstes Ende und ein gegenüberliegendes zweites Ende aufweist, welche an das Fahrzeugfahrgestell angelenkt sind,
- einen Schwenkarm (SAA, SAB) für jede Achse,
- einen Balg (ABA, ABB) für jede Achse, der zwischen der Blattfeder und dem Fahrzeugfahrgestell angeordnet ist,
wobei das erste Ende der zweiten Blattfeder (LSB) der zweiten Achse (B) mit dem Fahrgestell durch ein erstes Lagerelement (SS) schwenkbar verbunden ist, und der entsprechende Schwenkarm (SAB) ein erstes Ende aufweist, das ebenfalls mit dem Fahrzeugfahrgestell durch das erste Lagerelement (SS) schwenkbar verbunden ist, wodurch die erste und die zweite Blattfeder aufgrund des gemeinsamen ersten Lagerelements (SS) aufeinanderfolgen;
**dadurch gekennzeichnet, dass** jeder Schwenkarm (SAA, SAB) ein erstes Ende aufweist, das schwenkbar mit dem Fahrzeugfahrgestell verbunden ist, sowie ein zweites Ende, das mit einem Zwischenbereich der Blattfeder und mit einem Ende der jeweiligen Achse fest verbunden ist;
welches System ferner Puffer (WP) umfasst, die mit Seitenteilen des Fahrzeugs zu verbinden sind, in ihrer Verwendung nach unten vorspringen und wiederum elastische Elemente zum Anschlag der zweiten Enden der Schwenkarme (SAA, SAB) umfassen, wenn diese sich dem Fahrgestell nähern;
und jeder Balg (ABA, ABB) zwischen den zweiten Enden der Schwenkarme (SAA, SAB) und einem Seitenteil des Fahrzeugs angeordnet ist.

2. System gemäß Anspruch 1, bei welchem der Balg ein Luftbalg oder ein hydropneumatischer Balg ist.

3. System gemäß Anspruch 1 oder 2, bei welchem das erste Ende der ersten Blattfeder (LSA) der ersten Achse (A) mit dem Fahrgestell durch ein zweites Lagerelement (FS) schwenkbar verbunden ist, wobei der entsprechende Schwenkarm (SAA) ein erstes Ende aufweist, das ebenfalls mit dem Fahrzeugfahrgestell durch das zweite Lagerelement (FS) schwenkbar verbunden ist.

4. System gemäß Anspruch 3, bei welchem das erste und/oder das zweite Lagerelement ein erstes gemeinsames Scharnier für das erste Ende der ersten Blattfeder und das erste Ende des ersten Schwenkarms und/oder ein zweites gemeinsames Scharnier für das erste Ende der zweiten Blattfeder und das erste Ende des zweiten Schwenkarms definieren.

5. System gemäß Anspruch 4, bei welchem die erste Blattfeder ein zweites Ende aufweist, welches mit dem Fahrzeugfahrgestell mittels des zweiten Lagerelements schwenkbar verbunden ist, wodurch ein drittes Scharnier definiert wird, welches parallel zu dem zweiten Scharnier steht.

6. System gemäß den vorhergehenden Ansprüchen 3 bis 5, bei welchem die zweite Blattfeder ein zweites Ende aufweist, welches mit dem Fahrzeugfahrgestell durch ein drittes Lagerelement (TS) schwenkbar verbunden ist, wodurch ein viertes Scharnier definiert wird.

7. System gemäß einem der vorhergehenden Ansprüche 1 bis 6, ferner umfassend Lastverteilungsmittel, die den ersten und zweiten Balgen (ABA, ABB) funktionell zugeordnet sind, ausgebildet zur gleichmäßigen Verteilung einer Last auf die ersten und zweiten Achsen.

8. System gemäß Anspruch 7, ferner umfassend Mittel zur Veränderung der Steifigkeit und/oder Höhe der ersten und zweiten Achsen (A, B) durch Erhaltung einer gleichförmigen Verteilung der Last auf die ersten und zweiten Achsen.

9. Nutzfahrzeug, umfassend ein Fahrgestell, zwei Vorderachsen (A, B), nämlich eine erste Achse (A) und eine zweite Achse (B), die unmittelbar hinter der ersten Achse (A) angeordnet ist, welche beide mit dem Fahrgestell (SM) verbunden sind, wobei das Aufhängungssystem eines gemäß einem der vorhergehenden Ansprüche 1 bis 8 ist.

## Revendications

1. Système de suspension avant pour véhicules industriels comprenant deux essieux frontaux (A, B), un premier essieu (A) et un second essieu (B) ajusté juste derrière le premier essieu (A), tous deux raccordés à un châssis de véhicule (SM), dans lequel le système de suspension comprend, pour chaque côté du véhicule :
deux ressorts à lames (LSA, LSB) consécutifs, un pour chacun desdits essieux (A, B), dans lequel chaque ressort à lames a une première extrémité et une seconde extrémité opposée, articulée par rapport au châssis de véhicule,
un bras oscillant (SAA, SAB) pour chaque essieu,
un soufflet (ABA, ABB) pour chaque essieu, intercalé entre le ressort à lames et le châssis de véhicule,
ladite première extrémité du second ressort à lames (LSB) du second essieu (B) étant articulée par rapport au châssis au moyen d'un premier élément de support (SS), et dans lequel ledit bras oscillant (SAB) correspondant a une première extrémité également articulée par rapport au châssis de véhicule, au moyen dudit premier élément de support (SS), ainsi lesdits premier et second ressorts à lames sont consécutifs en raison dudit premier élément de support (SS) commun ;
**caractérisé en ce que** chacun desdits bras oscillants (SAA, SAB) a une première extrémité articulée par rapport au châssis de véhicule et une seconde extrémité raccordée, de manière fixe, avec une région intermédiaire du ressort à lames et avec une extrémité de l'essieu correspondant ;
ledit système comprenant en outre des pare-chocs (BP) pouvant être raccordés aux éléments latéraux dudit véhicule, faisant saillie, à l'usage, vers le bas, et comprenant à leur tour, des éléments résilients pour arrêter lesdites secondes extrémités desdits bras oscillants (SAA, SAB) tout en s'approchant dudit châssis ;
chacun desdits soufflets (ABA, ABB) étant intercalé entre lesdites secondes extrémités desdits bras oscillants (SAA, SAB) et un élément latéral dudit véhicule.

2. Système selon la revendication 1, dans lequel ledit soufflet est un soufflet pneumatique ou un soufflet hydropneumatique.

3. Système selon la revendication 1 ou 2, dans lequel ladite première extrémité dudit premier ressort à lames (LSA) du premier essieu (A) est articulée par rapport au châssis au moyen d'un deuxième élément de support (FS) et dans lequel ledit bras oscillant (SAA) comprend une première extrémité également articulée par rapport au châssis de véhicule au moyen dudit deuxième élément de support (FS).

4. Système selon la revendication 3, dans lequel lesdits premier et/ou deuxième éléments de support définissent une première charnière commune pour ladite première extrémité dudit premier ressort à lames et ladite première extrémité dudit premier bras oscillant et/ou une deuxième charnière commune pour ladite première extrémité dudit second ressort à lames et ladite première extrémité dudit second bras oscillant.

5. Système selon la revendication 4, dans lequel ledit premier ressort à lames a une seconde extrémité articulée par rapport au châssis de véhicule au moyen dudit deuxième élément de support définissant une troisième charnière parallèle à ladite deuxième charnière.

6. Système selon les revendications 3 à 5, dans lequel ledit second ressort à lames a une seconde extrémité articulée par rapport au châssis de véhicule au moyen d'un troisième élément de support (TS) définissant une quatrième charnière.

7. Système selon l'une quelconque des revendications 1 à 6, comprenant en outre un moyen de distribution de charge associé, de manière opérationnelle avec lesdits premier et second soufflets (ABA, ABB) configurés pour répartir, régulièrement, une charge sur lesdits premier et second essieux.

8. Système selon la revendication 7, comprenant en outre un moyen pour modifier la rigidité et/ou la hauteur desdits premier et second essieux (A, B) en maintenant une répartition régulière de la charge sur lesdits premier et second essieux.

9. Véhicule industriel ayant un châssis, deux essieux avant (A, B) : un premier essieu (A) et un second essieu (B) agencé juste derrière le premier essieu (A), tous deux raccordés audit châssis (SM), dans lequel le système de suspension est conforme à l'une quelconque des revendications 1 à 8.
